(19) Europäisches Patentamt
European Patent Office
Office européen des brevets

(11) **EP 2 507 321 B1**

(12) **EUROPÄISCHE PATENTSCHRIFT**

(45) Veröffentlichungstag und Bekanntmachung des Hinweises auf die Patenterteilung:
**22.07.2015 Patentblatt 2015/30**

(21) Anmeldenummer: **10788251.6**

(22) Anmeldetag: **30.11.2010**

(51) Int Cl.:
**C09C 3/06** *(2006.01)*  **C09K 11/02** *(2006.01)*

(86) Internationale Anmeldenummer:
**PCT/EP2010/007264**

(87) Internationale Veröffentlichungsnummer:
**WO 2011/066948 (09.06.2011 Gazette 2011/23)**

(54) **FESTKÖRPERPARTIKEL MIT SILIKATBESCHICHTUNG**

SOLID PARTICLES HAVING A SILICATE COATING

PARTICULES SOLIDES POSSÉDANT UN REVÊTEMENT DE SILICATE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.12.2009 DE 102009056634**

(43) Veröffentlichungstag der Anmeldung:
**10.10.2012 Patentblatt 2012/41**

(73) Patentinhaber: **Giesecke & Devrient GmbH**
**81677 München (DE)**

(72) Erfinder:
• **KECHT, Johann**
**81677 München (DE)**
• **STEINLEIN, Stephan**
**80538 München (DE)**

(56) Entgegenhaltungen:
**EP-A1- 1 179 507      EP-A1- 1 548 071**
**JP-B2- 3 650 292      US-A- 6 132 773**

## Beschreibung

Die Erfindung betrifft ein Verfahren zur Herstellung von Festkörperpartikeln mit einer Silicabeschichtung bzw. zum Beschichten von Festkörperpartikeln mit Silica. Die Verfahrensprodukte weisen somit einen Kern und eine Hülle auf, wobei die Hülle Silica aufweist oder aus Silica besteht, während der Kern ein von Silica verschiedener Feststoff ist.

Das erfindungsgemäße Verfahren ist grundsätzlich zur Silicabeschichtung beliebiger Festkörperpartikel geeignet. Beispielsweise können beliebige, unter den Prozessbedingungen des Beschichtungsverfahrens stabile, anorganische Festkörper beschichtet werden, insbesondere säurelabile Stoffe, wobei das erfindungsgemäße Verfahren schwerpunktmäßig auf den Schutz von Merkmalsstoffen abzielt. Die Erfindung wird im Folgenden anhand säurelabiler Merkmalsstoffe als zu beschichtende Festkörperartikel beschrieben.

Wertdokumente, wie beispielsweise Banknoten, Aktien, Anleihen, Urkunden, Schecks, und andere fälschungsgefährdete Papiere, wie Pässe oder sonstige Ausweisdokumente, werden in der Regel mit verschiedenen Sicherheitsmerkmalen zur Erhöhung der Fälschungssicherheit ausgestattet. Ein derartiges Sicherheitsmerkmal weist typischerweise zumindest einen Merkmalsstoff auf. Bei derartigen Merkmalsstoffen handelt es sich beispielsweise um lumineszierende, magnetische, elektrisch leitfähige oder in bestimmten Wellenlängenbereichen absorbierende Substanzen.

Merkmalsstoffe weisen allerdings oftmals den Nachteil einer geringen Stabilität gegenüber äußeren Einflüssen, wie beispielsweise Sauerstoff, Feuchtigkeit, organische Lösungsmittel und oxidierende bzw. reduzierende Substanzen, auf. Ein weiteres, gravierendes Problem ist die Empfindlichkeit vieler Merkmalsstoffe gegen Säuren.

Es gibt eine Vielzahl von Verbindungen, die an sich physikalische Eigenschaften aufweisen, die sie als Merkmalsstoffe für Wertdokumente hervorragend geeignet machen würden. Leider verändern sich diese physikalischen Eigenschaften aber beim tatsächlichen Einsatz in einem Wertdokument mehr oder weniger schnell, wodurch die Prüfung auf Echtheit des Wertdokuments zu falschen Ergebnissen führen kann. Das entscheidende Hindernis, das die Verwendung der Merkmalsstoffe in Wertdokumenten unmöglich macht, ist häufig die Empfindlichkeit der Merkmalsstoffe gegen Säuren. Wertdokumente, und insbesondere Banknoten, kommen sehr häufig mit der menschlichen Haut, die einen sauren pH-Wert zwischen 5 und 6 aufweist, in Kontakt. Durch den wiederholten Kontakt mit diesem sauren Medium kommt es bei vielen Merkmalsstoffen zu einer chemischen Veränderung, wodurch zwangsläufig eine Veränderung der maschinenlesbaren oder visuell wahrnehmbaren Eigenschaften bedingt ist. Es wurden daher bereits Versuche unternommen, als Merkmalsstoffe geeignete Substanzen, die aber die hohen Anforderungen an die Beständigkeit ihrer maschinenlesbaren oder visuell wahrnehmbaren Eigenschaften, die bei der Verwendung in Wertdokumenten erfüllt werden müssen, nicht erfüllen können, gegenüber äußeren Einflüssen, insbesondere gegenüber der Einwirkung von sauren Medien, geeignet zu schützen.

In der WO 2006/072380 wird vorgeschlagen, einen säurelabilen Merkmalsstoff mit einer im Wesentlichen aus Metalloxid bestehenden Hülle auszustatten. Zur Bildung der Hülle werden entweder ein oder mehrere Merkmalsstoffe und ein oder mehrere Metalloxid-Vorläufer in einem Lösungsmittel unter basischen Bedingungen bei einem höheren pH-Wert als 8 zur Reaktion gebracht, oder es werden ein oder mehrere Merkmalsstoffe in einem Lösungsmittel unter basischen Bedingungen bei einem höheren pH-Wert als 8 dispergiert und anschließend ein oder mehrere in einem Lösungsmittel gelöste Metalloxid-Vorläufer langsam zugetropft, oder es werden ein oder mehrere Merkmalsstoffe und ein oder mehrere Metalloxid-Vorläufer in einem Lösungsmittel bei einem neutralen oder leicht basischen pH-Wert dispergiert bzw. gelöst und anschließend eine Base langsam zugetropft. Geeignete Metalloxid-Vorläufer sind Metallorganyl-Verbindungen, die durch Kondensationsreaktionen zur Bildung des Metalloxids der Hülle führen. Durch kinetische Kontrolle der Hydrolysereaktion über Parameter wie pH, Eintropfgeschwindigkeit und Temperatur kann eine unkontrollierte Gelbildung verhindert werden, welche ansonsten zu unerwünschten Agglomeraten bzw. ausgedehnten dreidimensionalen Netzwerken führen kann. Als Nebenprodukt der Hydrolyse der Metallorganyl-Verbindungen können flüchtige organische Verbindungen entstehen, welche prozesstechnisch von Nachteil sind.

Aus der WO 2006/030001 ist ein Verfahren zur Herstellung einer Silicabeschichtung auf Partikeln bekannt, bei dem man zu einer Dispersion der Partikel gleichzeitig eine Silicat enthaltende Lösung und eine Säure zugibt. Um eine Agglomeration zu verhindern, wird die Dispersion akustisch erregt, beispielsweise durch Ultraschall.

Weitere Verfahren zur Erzeugung einer Silicabeschichtung auf Partikeln sind beispielsweise aus US 2 885 366, aus GB 2 042 574 A und aus US 6132 773 bekannt.

Bei dem Verfahren gemäß US 2 885 366 wird durch Ansäuern eines Alkalimetallsilicats "aktives Silica" hergestellt und zu einer wässrigen Suspension des zu beschichtenden Materials zugegeben. Das Ansäuern erfolgt bevorzugt mit Schwefelsäure. Bei dem in GB 2 042 574 A offenbarten Verfahren wird in einer wässrigen Dispersion eines anorganischen Pigments ein Silicasol erzeugt, indem ein Alkalimetallsilicat sowie eine Verbindung zugegeben werden, die aus dem Alkalimetallsilicat das Silicasol zu erzeugen vermag. Derartige Verbindungen sind Säurequellen wie organische Säuren, Phosphorsäuren, Boratester, Phosphatester, Alkalimetallsalze, Ammoniumsalze, Borsäure und Ethylencarbonat. US 6 132 773 offenbart ein Verfahren zur Beschichtung von Partikeln mit einer Silicahülle, bei dem den zu beschichtenden Partikeln gleichzeitig ein Silicat und eine Säurequelle zugegeben wird, wobei zur Erhöhung der Ionenkonzentration und damit der Silica-Abscheidungsgeschwindigkeit ein Elektrolyt zugesetzt wird. Als Säurequelle wird beispielsweise eine anorganische Säure, eine organische Säure oder Kohlensäure verwendet, und der Elektrolyt ist ein Alkalimetallsalz.

Den meisten der genannten Verfahren ist gemeinsam, dass eine Dispersion des zu beschichtenden Festkörpers vorgelegt wird, zu der gleichzeitig sowohl ein Siliciumdioxid-Vorläufer als auch eine Säure zudosiert werden. Diese Vorgehensweise hat diverse Nachteile. Zur Bildung von homogenen, gut abdeckenden Schichten mit hoher Säurebeständigkeit müssen die Mengen an zudosiertem Silicat und an Säure sorgfältig abgeglichen werden, d. h. es ist eine sorgfältige Dosierkontrolle und pH-Kontrolle erforderlich. pH-Schwankungen führen zu Unregelmässigkeiten des Silica-Nanopartikelwachstums, d. h. zu Größenunterschieden und Agglomerationen der Silica-Nanopartikel. Im schlimmsten Fall kann der säurelabile Merkmalsstoff angelöst oder aufgelöst werden. Denn an der Eintropfstelle der Säure besteht kurzzeitig, bis zur Durchmischung mit der umgebenden Lösung, ein Säure-Überschuss, welcher ausreicht, um säurelabile Merkmale teilweise zu zerstören. Außerdem können Nebenprodukte, die aus dem aufgelösten oder angelösten Merkmalsstoff entstehen, zu abweichenden Merkmal-Signalen führen, beispielsweise zu zusätzlichen Lumineszenzbanden bei Leuchtstoffen, was bei Echtheitsprüfungen zu verfälschten Ergebnissen führt, oder toxikologisch bedenklich seien. Außerdem ist das Arbeiten mit starken Säuren unter dem Gesichtspunkt des Arbeitsschutzes nicht erstrebenswert.

Ein vergleichsweise gutes Beschichtungsverfahren ist das in WO 2006/072380 A2 offenbarte Verfahren. Es basiert jedoch nicht auf dem Ansäuern basischer Siliciumdioxid-Vorläufer auf Silikatbasis, sondern auf der basischen Hydrolyse metallorganischer Metalloxid-Vorläufer. Auch dieses Verfahren erfordert jedoch eine sorgfältige pH-Kontrolle und ist anfällig für Prozessinstabilitäten mit daraus resultierenden Agglomerationsproblemen.

JP 3 650 292 B2 (= Dé1) beschreibt ein Verfahren zur Herstellung gelber, pulverförmiger Partikel, die an der Oberfläche eine Beschichtung, z.B. eine Silica-Hülle, tragen. Die Beschichtung wird durch die Reaktion eines Metallsalzes in einer wässrigen Lösung gebildet. In einem Ausführungsbeispiel wird beschrieben, dass Magnetitpartikel in eine auf Borsäure basierende Pufferlösung gegeben werden. Der Lösung wird eine Natriumsilicatlösung hinzugefügt, um eine Silica-Hülle an der Oberfläche abzuscheiden.

EP 1 548 071 A1 (= D2) beschreibt ein Verfahren zur Herstellung eines Pulvers, insbesondere eines Interferenz-Pulvers, dessen Partikel mit einem mehrschichtigen Film überzogen sind. In einem Ausführungsbeispiel wird beschrieben, dass zu beschichtende Eisen-Partikel in eine auf Borsäure basierende Pufferlösung gegeben werden. Der Lösung wird eine Natriumsilicatlösung hinzugefügt, um eine Silica- . Hülle an der Oberfläche abzuscheiden. Anschließend erfolgt die Erzeugung einer zweiten, aus Aluminiumoxid gebildeten Schicht und die Erzeugung einer dritten, aus Titanoxid gebildeten Schicht.

EP 1 179 507 A1 (= D3) beschreibt ein Verfahren zur Herstellung eines weißen Pulvers, dessen Partikel an ihrer Oberfläche mit zumindest einem, auf einem Aggregat aus kristallisierten Partikeln basierenden Film beschichtet sind. In einem Ausführungsbeispiel wird beschrieben, dass zu beschichtende Magnetit-Partikel in eine auf Borsäure basierende Pufferlösung gegeben werden. Der Lösung wird eine Natriumsilicatlösung hinzugefügt, um eine Silica-Hülle an der Oberfläche abzuscheiden. Anschließend erfolgt die Erzeugung einer zweiten, aus Titanoxid gebildeten Schicht.

US 6132 773 A (= D4) beschreibt ein Verfahren zur Herstellung von Partikeln mit einem eine biologische Aktivität aufweisenden Kern und einer Silica-Hülle. Die Herstellung erfolgt durch schnelles Abscheiden von aktivem Silica aus einer wässrigen Alkalimetallsilicatlösung bei pH-Einstellung mittels eines ansäuernden Stoffes.

Davon ausgehend liegt der Erfindung die Aufgabe zugrunde, ein gegenüber dem Stand der Technik verbessertes Verfahren zur Beschichtung pulverförmiger Feststoffe mit einer gegenüber äußeren Einflüssen, insbesondere gegenüber der Einwirkung von sauren Medien, schützenden Beschichtung bereit zu stellen. Das Verfahren soll insbesondere zur Beschichtung säurelabiler Merkmalsstoffe geeignet sein.

Die Aufgabe wird gelöst durch das Verfahren mit den Merkmalen des unabhängigen Anspruchs. Ausgestaltungen des erfindungsgemäßen Verfahrens sind in den abhängigen Ansprüchen angegeben.

Die vorliegende Erfindung basiert auf dem Grundgedanken, ein Puffersystem als Säurequelle zur Ausfällung von Silica aus Silicatlösungen zu verwenden. Die gleichzeitige, abgestimmte Zugabe einer Säure als zweite Dosierkomponente zur Neutralisation der basischen Silikatlösung ist zu keinem Zeitpunkt des Verfahrens erforderlich. Vielmehr wird eine Dispersion der zu beschichtenden Festkörperpartikel, die mittels eines Puffersystems basisch eingestellt ist, vorgelegt, und dieser Dispersion lediglich eine basische Silicat-lösung zudosiert. Der Säurecharakter des Puffersystems wird zur Ausfällung des Silica genutzt, wobei sich der pH-Wert der Dispersion entsprechend des sich ändernden Gleichgewichtssystems der Pufferlösung in streng definierter und kontrollierter Art und Weise kontinuierlich und langsam erhöht. Dadurch werden plötzliche pH-Wert-Schwankungen während dem Beschichtungsprozess und daraus resultierende Nachteile vermieden.

Die vorliegende Erfindung wurde insbesondere, aber nicht ausschließlich, für den Schutz säurelabiler Merkmalsstoffe konzipiert. Die Säurestabilität von Merkmalsstoffen wird im Hinblick auf die Beständigkeit der physikalischen Eigenschaften der Merkmalsstoffe bei Einwirkung eines sauren Mediums beurteilt. Wie erwähnt, müssen die Merkmalsstoffe bei ihrer Verwendung in Wertdokumenten hohe Anforderungen an die Beständigkeit ihrer maschinenlesbaren oder visuell wahrnehmbaren Eigenschaften erfüllen. Durch den Kontakt mit einem sauren Medium, wie menschlicher Haut, kann es zu einer chemischen Veränderung der Merkmalsstoffe kommen, wodurch zwangsläufig eine Veränderung der maschinenlesbaren oder visuell wahrnehmbaren Eigenschaften bedingt wird.

Unter "säurelabilen Merkmalsstoffen" werden daher Merkmalsstoffe verstanden, die ihre maschinenlesbaren oder visuell wahrnehmbaren physikalischen Eigenschaften bei Einwirkung eines sauren Mediums verändern. Erfindungsgemäß beschichtete säurelabile Merkmalsstoffe weisen eine gegenüber den unbeschichteten säurelabilen Merkmalsstoffen erhöhte Säurestabilität auf, d. h., ihre maschinenlesbaren oder visuell wahrnehmbaren physikalischen Eigenschaften verändern sich bei Einwirkung eines sauren Mediums vorzugsweise nicht oder nur in einem so geringen Maße, dass eine Prüfung einer bestimmten physikalischen Eigenschaft im Rahmen eines Echtheitstests kein verfälschtes Ergebnis liefert. Hinsichtlich der Definition der Begriffe "Säurestabilität" und "Säurelabilität" bzw. ihre Abgrenzung gegeneinander, und hinsichtlich geeigneter Tests (Banknotentests) zur Prüfung auf Säurestabilität wird auf die diesbezügliche Offenbarung in der WO 2006/072380 verwiesen.

Hinsichtlich der zur Beschichtung geeigneten säurelabilen Merkmalsstoffe bzw. Gemische von säurelabilen Merkmalsstoffen wird ebenfalls auf die WO 2006/072380 und die darin offenbarten Substanzen (säurelabiler Kern) verwiesen. Das erfindungsgemäße Beschichtungsverfahren ist generell geeignet zur Beschichtung sämtlicher schwer löslichen anorganischen Festkörper. Einige Beispiele, die jedoch nicht begrenzend wirken sollen, sind

Oxide, insbesondere 3- und 4-wertige Oxide wie z. B. Titanoxid, Aluminiumoxid, Eisenoxid, Boroxid, Yttriumoxid, Ceroxid, Zirconoxid, Bismutoxid, sowie komplexere Oxide wie z. B. Granate, darunter u. A. z.B. Yttrium-Eisen-Granate, Yttrium-Aluminium-Granate, Gadolinium-Gallium-Granate; Perowskite, darunter u.A. Yttrium-Aluminium-Perowskit, Lanthan-Gallium-Perowskit; Spinelle, darunter u. A. Zink-Aluminium-Spinelle, Magnesium-Aluminium-Spinelle, Mangan-Eisen-Spinelle; oder Mischoxide wie z.B. ITO (Indiumzinnoxid);
Oxyhalogenide und Oxychalkogenide, insbesondere Oxychloride wie z. B. Yttriumoxychlorid, Lanthanoxychlorid; sowie Oxysulfide, wie z.B. Yttriumoxysulfid, Gadoliniumoxysulfid;
Sulfide und andere Chalkogenide, z.B. Zinksulfid, Cadmiumsulfid, Zinkselenid, Cadmiumselenid;
Sulfate, insbesondere Bariumsulfat und Strontiumsulfat;
Phosphate, insbesondere Bariumphosphat, Strontiumphosphat, Calciumphosphat, Yttriumphosphat, Lanthanphosphat, sowie komplexere phosphatbasierte Verbindungen wie z.B. Apatite, darunter u. A. Calciumhydroxylapatite, Calciumfluoroapatite, Calciumchloroapatite; oder Spodiosite, darunter z.B. Calcium-Fluoro-Spodiosite, Calcium-Chloro-Spodiosite;
Metalle, wie z. B. Cobalt oder Nickel;
Silicate und Aluminosilicate, insbesondere Zeolithe wie z.B. Zeolith A, Zeolith Y; zeolithverwandte Verbindungen wie z.B. Sodalithe; Feldspate wie z.B. Alkalifeldspate, Plagioklase;
weitere anorganische Verbindungsklassen wie z.B. Vanadate, Germanate, Arsenate, Niobate, Tantalate.

Dabei können die genannten anorganischen Festkörper natürlich auch, z.B. zur Ausbildung eines lumineszierenden Merkmalsstoffs, zusätzlich mit ein oder mehreren Elementen, insbesondere mit Kombinationen aus Seltenerden oder mit Übergangsmetallen, dotiert sein.

Neben anorganischen Festkörpern können prinzipiell auch beliebige andere Festkörper und Festkörpergemische, beispielsweise organische Materialien wie z.B. organische Pigmentpartikel, beschichtet werden, sofern sie mit den Prozessbedingungen kompatibel sind, also schwerlöslich in Wasser sind, eine ausreichende Benetzbarkeit, thermische Stabilität, und chemische Stabilität im pH-Bereich des Puffersystems aufweisen, und inert gegenüber Silica sind.

Ferner schützen die erfindungsgemäßen Beschichtungen nicht nur gegen die Wirkung von Säuren, sondern gegen Umwelteinflüsse unterschiedlichster Art. Beispielsweise können durch die erfindungsgemäße Beschichtung oxidationsempfindliche Festkörper gegen die Einwirkung von Luftsauerstoff geschützt werden, gegen die Einwirkung bestimmter Lösungsmittel oder sonstiger Chemikalien empfindliche Festkörper gegen die Einwirkung der betreffenden Lösungsmittel bzw. Chemikalien geschützt werden, entzündliche Stoffe gegen Entzündung geschützt werden, oder auch die mechanische Stabilität brüchiger Feststoffe verbessert werden. Das erfindungsgemäße Beschichtungsverfahren ist somit generell zur Stabilisierung sowie zum Schutz gegen äußere Einflüsse von Festkörperpartikeln geeignet.

Bei manchen Festkörperpartikeln kann es vorteilhaft sein, die Anhaftung der Silicabeschichtung durch vorherige Behandlung der Pestkörperpartikel mit einem Haftvermittler zu verbessern. Geeignete Haftvermittler sind beispielsweise eine aminomethoxy-funktionelle Verbindung (beispielsweise addid900 von Wacker Chemie) oder APS (3-(2-Aminoethylamino) propyltrimethoxysilan) oder KR44 von Wacker Chemie (Isopropyl-tri (N-ethylendiamino) ethyl-titanat). Zur Haftvermittlerbehandlung werden vorzugsweise zuerst die Festkörperpartikel in einem Lösungsmittel dispergiert, und dann der Haftvermittler zugegeben. Die Haftvermittler hydrolysieren autokatalytisch. Nachdem sich ein erstes dünnes Coating des Haftvermittlers auf den Festkörperpartikeln abgesetzt hat, sind die Festkörperpartikel bereit zur Durchführung des erfindungsgemäßen Beschichtungsverfahrens.

Wenn die erfindungsgemäß beschichteten Festkörperpartikel Merkmalsstoffe sind, gibt es gewisse Einschränkungen hinsichtlich der Größe der Ausgangs-Festkörperpartikel (Kerne) und der fertig beschichteten Festkörperpartikel (Kerne mit Hüllen aus Silica). Die Einschränkungen sind dadurch bedingt, dass die beschichteten Festkörperpartikel zur Einbringung in das Substrat von Wertdokumenten bzw. zur Aufbringung mittels Druckverfahren geeignet sein müssen. Die Größe der Kerne richtet sich daher für gewöhnlich nach dem Einsatzzweck.

Kerne mit einem Durchmesser, der zwischen 1 $\mu$m und 50 $\mu$m, bevorzugt zwischen 1 $\mu$m und 20 $\mu$m, und besonders bevorzugt etwa 10 $\mu$m, beträgt, eignen sich insbesondere für lumineszierende, magnetische und elektrisch leitfähige Merkmalsstoffe. Kerne mit einem Durchmesser von größer als 1 $\mu$m eignen sich für den Einsatz im Siebdruckverfahren oder für die Einbringung der Merkmalsstoffe in das Wertpapiersubstrat bei dessen Herstellung. Kerne mit einem Durchmesser von kleiner als 1 $\mu$m, besonders bevorzugt kleiner als 600 nm, eignen sich für den Einsatz im Ink-Jet-Verfahren.

Die Silicahüllen weisen eine Dicke von 10 $\mu$m und weniger, besonders bevorzugt von 1 $\mu$m und weniger, auf. Daraus ergibt sich für die beschichteten Festkörperpartikel (Kern plus Silicahülle) ein Durchmesser zwischen 0,5 $\mu$m und 60 $\mu$m. Merkmalsstoff-Partikel haben bevorzugt einen Durchmesser zwischen 1 $\mu$m und 20 $\mu$m. Vorzugsweise weisen 99 % aller Merkmalsstoff-Partikel einen Partikeldurchmesser von kleiner als 20 $\mu$m auf.

Mit den angegebenen Durchmesserbereichen für die beschichteten Merkmalspartikel lassen sich alle Arten von Sicherheitselementen, Sicherheitspapieren und Wertdokumenten problemlos herstellen.

Bei dem erfindungsgemäßen Beschichtungsverfahren werden die Festkörperpartikel mit einer Beschichtung aus Silica ausgestattet. Silica ist eine amorphe Form des Siliciumdioxid $SiO_2$.

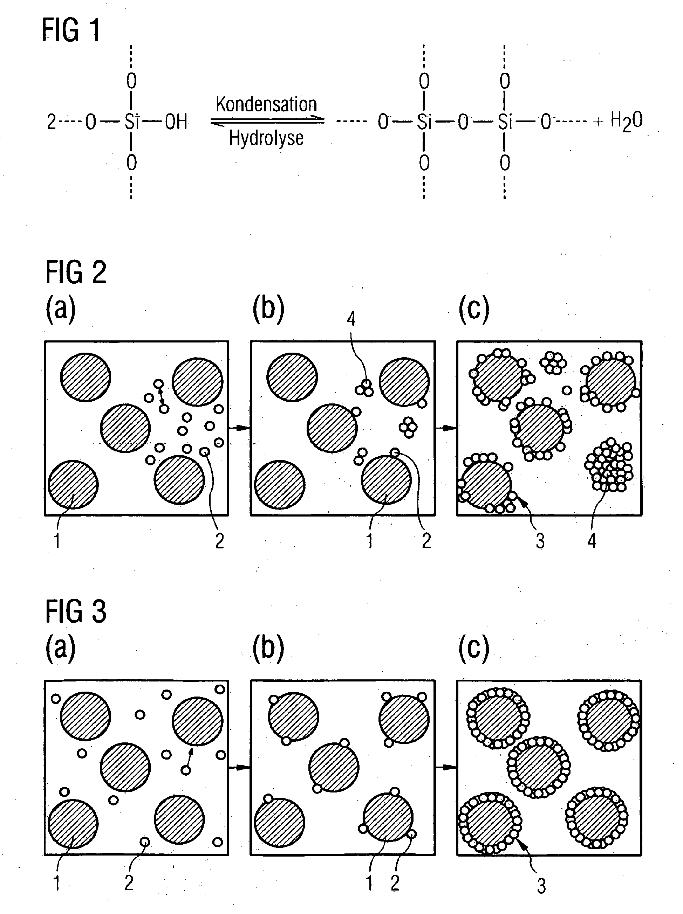

Silica kann auf unterschiedlichen Wegen und aus unterschiedlichen Vorläufern gewonnen werden. Bei dem erfindungsgemäßen Beschichtungsverfahren wird es aus stark basischen silicathaltigen Lösungen ausgefällt. Geeignete silicathaltige Lösungen sind Natrium- und Kalium-Wassergläser. Die Ausfällung wird dadurch bewirkt, dass durch Veränderung des pH-Werts, beispielsweise durch ein gezieltes Ansäuern der Silicatlösung, eine Kondensation der gelösten Silicatspezies verursacht wird. Der Kondensationsvorgang ist in Fig. 1 dargestellt. Bei der Kondensation verbinden sich z.B. zwei Silanolgruppen (Si-OH), welche durch Ansäuern von negativ geladenen Silicat-spezies (mit Si-O⁻-Gruppen) entstehen, unter Wasserabspaltung. Alternative Reaktionswege der Silicakondensation sind beispielsweise in der Fachliteratur zu Sol-Gel-Chemie beschrieben. Durch weitere Kondensation entstehen so Silicat-Oligomere, welche nach weiterer Vernetzung zur Bildung von kolloidalen Nanopartikeln führen.

Je nach pH-Wert, Konzentration, Temperatur, etc. ist eine gewisse Menge Silica in Form von Silicaten in einer Lösung lösbar, d. h. es fällt kein Silica in Form kolloidaler Partikel aus. Verändert man nun einen Parameter, beispielsweise durch Ansäuern oder Erhöhung der Stoffkonzentration, überschreitet man den stabilen Zustand, und man erhält eine "übersättigte" Lösung. Aus der übersättigten Lösung bilden sich anfangs sehr kleine Nanopartikel (Keime) aus Silica, wodurch die Übersättigung wieder abnimmt, da durch die Ausfällung des festen Silica die Silicat-Konzentration in der Lösung sinkt. Diese Phase der Keimbildung ist die "Nukleation".

Generell gilt: Je höher die Übersättigung, desto mehr Keime werden gebildet und desto schneller werden sie gebildet. Bei geringer Übersättigung ist die Keimbildungsgeschwindigkeit geringer, es bilden sich nur wenige Keime. Die entstandenen Keime wachsen anschließend durch Aufnahme überschüssigen Silikats aus der Lösung weiter. Da die Keime untereinander in der Silikataufnahme konkurrieren, sorgt eine hohe Anzahl an Keimen für kleinere Partikel, während eine geringe Keimanzahl größere Partikel hervorbringt. Somit entsteht ein direkter Einfluss des pH-Werts, welcher die Übersättigung sehr stark beeinflusst, und der Teilchengröße der entstehenden Silica-Nanopartikel.

Gegebenenfalls kann dieser Effekt durch pH-abhängige Agglomeration der Silica-Nanopartikel untereinander noch verstärkt werden. Ebenso kann eine zu hohe, schlagartige lokale Übersättigung zu Agglomeration führen, da zu viele Teilchen auf begrenztem Raum entstehen.

Zur Ausbildung einer möglichst homogenen Beschichtung gleichmäßiger Dicke auf den Festkörperpartikeln ist es vorteilhaft, bei gleichmäßiger Übersättigung viele kleine Silicakeime möglichst gleicher Größe und in guter Verteilung zu erzeugen. Bei dem erfindungsgemäßen Verfahren, bei, dem eine basische Silicatlösung nicht zusätzlich angesäuert wird, sondern direkt einer Pufferlösung zudosiert wird, entstehen zahlreiche kleine Silicakeime, da das Puffersystem im Vergleich zu einer zudosierten Säure, wie HCl oder $H_2SO_4$, die zur Bildung der Silanolgruppen erforderlichen Wasserstoffionen in einer räumlich sehr homogenen und gut definierten Konzentration bereitstellt. Keimbildung, Keimwachstum, und das pH-abhängige Agglomerationsverhalten der Silica-Nanopartikel sind somit im gesamten Reaktionsvolumen sehr homogen, wodurch nicht-agglomerierte Silica-Nanopartikel einheitlicher Größe erhalten werden. Beim Zudosieren einer Säure hingegen entsteht lokal ein starker pH-Gradient (z.B. sehr sauer an der Einführstelle der Säure), und damit stark inhomogene Nukleationsbedingungen.

Bei der Ausbildung der Silicabeschichtung auf den Merkmalsstoffpartikeln oder sonstigen Festkörperpartikeln gibt es drei miteinander konkurrierende Prozesse:

Die Agglomeration von Festkörperpartikeln und Silicapartikeln, die letztendlich zur Beschichtung der Festkörperpartikel mit den Silicapartikeln führt,

die Agglomeration von Silicapartikeln aneinander, die in geringem Umfang nicht stört, aber soweit sie zur Bildung großer Silica-Agglomerate führt, unerwünscht ist, und

die Agglomeration von zu beschichtenden Festkörperpartikeln aneinander, die ebenfalls unerwünscht ist.

Bei dem erfindungsgemäßen Beschichtungsverfahren werden daher die Bedingungen so gewählt, dass die Agglomeration von zu beschichtenden Festkörperpartikeln und Silicapartikeln gefördert wird, während die beiden konkurrierenden Prozesse unterdrückt werden.

Ein maßgeblicher Faktor ist dabei die Ionenkonzentration in der Dispersion der miteinander in Beziehung stehenden Partikel. Partikel gleicher Art besitzen die gleiche Oberflächenladung, beispielsweise eine negative Oberflächenladung bei Silicapartikeln. Daher stoßen sie sich elektrostatisch ab. Werden nun positiv geladenen Ionen in die Lösung bzw. Dispersion eingebracht, so können diese die negative Ladung abschirmen. Dadurch wird eine Annäherung der Partikel erleichtert, welche beim Zusammenstoß permanent miteinander agglomerieren können. Der Zusammenhalt der Partikel nach dem Zusammenstoß kann dabei beispielsweise durch kurzreichweitige van-der-Waals-Kräfte verursacht werden. Erfindungsgemäß wird durch die hohe Pufferkonzentration, welche nötig ist, um die zugeführte basische Silikatlösung vollständig zu kompensieren, auch eine hohe Ionenstärke in der Reaktionslösung erzeugt. Diese erleichtert somit gleichzeitig die schnelle Abscheidung der Silicapartikel auf den Merkmalspartikeln.

Es ist ebenfalls bekannt, dass eine schnelle Abscheidung durch erhöhte Temperaturen begünstigt wird. Bei höheren Temperaturen finden mehr erfolgreiche Zusammenstöße zwischen den Partikeln statt, bei denen die elektrostatischen abstoßenden Kräfte zwischen den Partikeln überwunden werden konnten. Erfindungsgemäß sollte daher bei mindestens 60 °C gearbeitet werden, da ansonsten auch bei relativ langsamer Zugabe der basischen Silikatlösung die Abscheidungsrate der Silica-Partikel so gering ist, dass durch die hohen Konzentrationen an nicht abgeschiedenen freien Silica-Nanopartikeln eine starke Agglomeration oder ein Ausgelen der Lösung möglich ist.

Dabei ist zu beachten, dass sich Agglomerate aus großen Partikeln (im $\mu$m-Bereich) durch Anwendung von Scherkräften relativ leicht wieder vereinzeln lassen, während Agglomerate sehr kleiner Partikel (im nm-Bereich) nur schwer wieder vereinzelt werden können. Da eine gewisse Agglomeration der Silicapartikel nicht störend ist, die Silica-Agglomerate jedoch im nm-Bereich bleiben sollen, wird erfindungsgemäß dafür gesorgt, dass die Agglomeration von Silicapartikeln untereinander nur in begrenztem Umfang stattfindet. Daher wird die Dispersion der zu beschichtenden Festkörperpartikel während der Zugabe der basischen Silicatlösung zu der Festkörperpartikeldispersion bevorzugt in Bewegung gehalten, beispielsweise durch starkes Rühren der Festkörperpartikeldispersion, so dass stets für eine gute Durchmischung der zu beschichtenden Festkörperpartikel und der sich bildenden und aneinander agglomerierenden Silicapartikel gesorgt wird. Eine gute Durchmischung bewirkt, dass eine homogene Verteilung von Silica-Nanopartikeln und zu beschichtenden Festkörperpartikeln vorliegt, so dass wenige Silica-Nanopartikel einer relativ großen Anzahl an zu beschichtenden Festkörperpartikeln als "Agglomerationspartner" gegenüberstehen. Ohne Durchmischung kann sich lokal eine relativ höhe Anzahl an Silica-Nanopartikeln bilden, sodass die Wahrscheinlichkeit einer unerwünschten Agglomeration der Silica-Nanopartikel untereinander steigt. Eine langsame Zugabe der basischen Silicatlösung zu der Festkörperpartikeldispersion über einen längeren Zeitraum hinweg hingegen hält die Anzahl an Silica-Nanopartikeln gering, so dass die Agglomeration von Silicapartikeln an zu beschichtende Festkörperpartikel gegenüber der Agglomeration von Silica-partikeln untereinander deutlich bevorzugt ist.

Eine gute Durchmischung, insbesondere unter Anwendung von Scherkräften, beispielsweise durch geeignete scherkrafterzeugende Rührwerkzeuge wie einen Ultra-Turrax der Firma IKA, sorgt außerdem dafür, dass die zu beschichtenden Festkörperpartikel nur in geringem Ausmaß agglomerieren, und, sofern größere Agglomerate gebildet werden, diese Agglomerate auch wieder getrennt werden. Dies liegt an der leichten Trennbarkeit von Agglomeraten aus Partikeln im $\mu$m-Bereich An den zu beschichtenden Festkörperpartikeln anhaftende Silica-Nanopartikel werden wegen ihrer geringen Größe jedoch nicht maßgeblich von den zu beschichtenden Festkörperpartikeln abgetrennt.

Die Figuren 2 und 3 zeigen jeweils die schematische Abscheidung von Silica-Nanopartikeln 2 auf zu beschichtenden Festkörperpartikeln 1 unter Bildung von Festkörperpartikeln mit Silicabeschichtung 3. Fig. 2a und Fig. 3a zeigen die Phase der Silica-Keimbildung (Nukleation), Fig. 2b und Fig. 3b zeigen die Phase des Schichtwachstums, und Fig. 2c und Fig. 3c zeigen das jeweilige Endprodukt, d. h. die beschichteten Festkörperpartikel. In Fig. 2 ist ein Abscheidungsprozess dargestellt, bei dem die Agglomeration von Silicapartikeln aneinander einen begünstigten Prozess darstellt. Ein derartiger Prozessverlauf wird erhalten, wenn eine sehr schnelle Zugabe der basischen Silicatlösung zu der Festkörperpartikeldispersion erfolgt und/oder wenn die Dispersion während des Beschichtungsprozesses nicht ausreichend durchmischt wird. Insbesondere wird ein derartiger Prozessverlauf erhalten, wenn lokal Säure zur Fällung der Silicapartikel zugegeben wird. Wie in Fig. 2a durch den Pfeil angedeutet, können bei hoher lokaler Konzentration benachbarte Silicapartikel leicht zusammenstoßen und in Folge durch kurzreichweitige van-der-Waals-Kräfte zu Silica-Agglomeraten 4 gebunden werden, die nicht mehr getrennt werden können. Die Silicabeschichteten Eestkörperpartikel 3 weisen keine gleichmäßige Silicabeschichtung auf. Vielmehr gibt es an der Oberfläche der Festkörperpartikel einerseits Silicapartikel-Agglomerate und andererseits unbeschichtete, oder weniger stark beschichtete bzw. stark inhomogen beschichtete, Oberflächenbereiche.

Anders bei dem erfindungsgemäßen Prozessverlauf gemäß Fig. 3. Bei dem erfindungsgemäßen Verfahren werden die Silicapartikel nicht durch Zugabe einer Säure ausgefällt, sondern durch Wasserstoffionen aus dem Puffersystem der Festkörperpartikeldispersion. Außerdem wird die basische Silicatlösung während eines längeren Zeitraums zu der gepufferten Festkörperpartikeldispersion zugegeben, d.h. innerhalb weniger Minuten zudosiert, und die Dispersion dabei stark durchmischt.

Dadurch wird die Konzentration an Silicapartikeln in der Dispersion gering gehalten, und insbesondere liegen die gebildeten Silicapartikel 2 gut verteilt und in guter Durchmischung mit den zu beschichtenden Festkörperpartikeln 1 vor. Die Anlagerung der Silicapartikel 2 an die zu beschichtenden Festkörperpartikel 1 ist daher gegenüber der Agglomeration der Silicapartikel aneinander bevorzugt, wie durch den Pfeil in Fig. 3a angedeutet. Nach und nach lagern sich immer mehr Silicapartikel 2 an den Festkörperpartikeln 1 an (Fig. 3b). Schließlich werden als Produkt silicabeschichtete Festkörperpartikel 3 gebildet, die eine homogene und gleichmäßige Beschichtung aus Silica-Nanopartikeln, ohne oder zumindest im Wesentlichen ohne unbeschichtete Festkörperpartikel-Oberflächenbereiche, aufweisen. Nebenprodukte wie die in Fig. 2 gezeigten Silica-Agglomerate 4 werden vermieden.

Die gebildeten Silica-Nanopartikel sind Oligomere aus miteinander kondensierten Silikat-Spezies mit nicht genau definiertem Kondensations- und Vernetzungsgrad, die eine solche Größe erreicht haben, dass sie zu kolloidalen Partikeln in der Lösung werden. Die Oligomer-Partikel haben Größen mit Durchmessern im Bereich von etwa 1 nm bis 10 nm. Die Oligomer-Primärpartikel können in gewissem Umfang zu etwas größeren Silica-Nanopartikeln agglomerieren, wobei die Durchmesser der gebildeten Silica-Nanopartikel bevorzugt 100 nm nicht überschreiten.

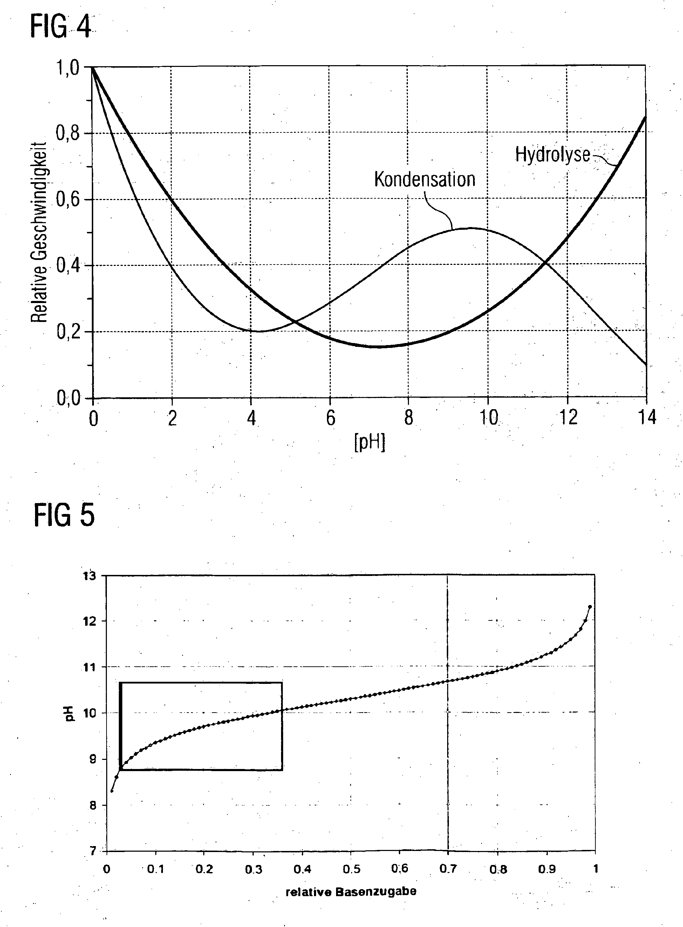

Einen großen Einfluss auf den Beschichtungsprozess hat auch der pH-Wert des Beschichtungssystems. Um Silicapartikel aus basischen Silicatlösungen ausfällen zu können, muss in irgendeiner Form Säure bereitgestellt werden. Der Reaktionsverlauf der Silicabildung ist jedoch stark abhängig vom pH-Wert. So kann z.B. die Hydrolyse bestehender [Si-O-Si]-Bindungen sowohl basisch als auch sauer katalysiert ablaufen, die Geschwindigkeit dieser Reaktion ist daher jeweils im stark basischen und stark sauren am schnellsten. Ein komplexerer Zusammenhang ergibt sich bei der Abhängigkeit der Kondensationsgeschwindigkeit, und damit die Bildungsgeschwindigkeit der Silica-Nanopartikel, vom pH-Wert. Wie in Fig. 4 dargestellt verläuft sie im leicht sauren pH-Bereich, sowie im stark basischen pH-Bereich langsam, im schwach bis mittelstark basischen Bereich und im stark sauren Bereich jedoch schnell.

Eine für einen Beschichtungsprozess brauchbare Kondensationsgeschwindigkeit liegt in einem pH-Bereich zwischen 7 und 11 vor. Bei einem pH-Wert von 7 ist allerdings die Hydroxid-Konzentration sehr klein, die Übersättigung und Keimbildung daher gering, weshalb die Silica-Keime unvorteilhaft groß werden. Ebenso steigt die Löslichkeit von Silica mit dem pH-Wert, ab einem pH-Wert von 11 liegen somit signifikante Anteile des Silica gelöst vor. Bevorzugt wird daher erfindungsgemäß im basischen pH-Bereich von 8 bis 11 gearbeitet. Der pH-Bereich, in dem die Kondensationsgeschwindigkeit, und damit die Keimbildungsrate, am höchsten ist, ist der pH-Bereich zwischen 8,5 und 10,5. In diesem Bereich wird in vorteilhafter Weise rasch eine große Anzahl kleiner Silica-Keime gebildet. Daher wird erfindungsgemäß der pH-Wert der Festkörperpartikeldispersion bevorzugt auf 8,5 bis 10,5 eingestellt.

Es ist ein wesentliches Merkmal der vorliegenden Erfindung; dass der pH-Wert der Reaktionsdispersion, d. h. der Festkörperpartikeldispersion, zu der die basische Silicatlösung zugegeben wird, mittels eines geeigneten Puffersystems während der gesamten Zugabe der basischen Silikatkomponente in einem engen pH-Bereich gehalten wird.

Ein Puffersystem ist eine Kombination aus einer Säure (HA) und der korrespondierenden Base (A-) deren Gemisch in der Lage ist, den pH-Wert einer Lösung in einem engen Bereich um einen bestimmten Wert zu stabilisieren. Änderungen des pH-Werts werden dabei gedämpft, indem entweder Protonen durch die Säure HA abgegeben oder durch die Base A$^-$ aufgenommen werden.

In einem ungepufferten System führt die Zugabe einer starken Säure (z. B. HCl) schon bei kleinen Mengen zu einer schlagartigen Änderung des pH-Werts. In einem gepufferten System werden die von der starken Säure abgegebenen Protonen durch die Puffer-Base (A$^-$) aufgenommen, welche dadurch zur (schwachen) Puffer-Säure (HA) wird, und so die Protonen bindet. Analoges gilt für die Zugabe einer stärken Base (z. B. NaOH), deren Hydroxid-Ionen der Puffer-Säure Protonen entziehen. Die Änderung des pH-Werts in einem gepufferten System lässt sich näherungsweise über die Henderson-Hasselbalch-Gleichung angeben, wobei der sog. $pK_s$-Wert eine spezifische Konstante für die Art des Puffers ist:

$$pH = pK_s - \lg \frac{c(HA)}{c(A^-)}$$

Sind c (HA) und c (A-) gleich groß, gilt pH = pK$_s$ ("Pufferpunkt"). Selbst wenn durch Zugabe starker Säuren oder starker Basen eine Pufferkomponente so weit verbraucht wird, dass beide Pufferkomponenten nun in einem Verhältnis von 10 : 1 stehen, ergibt sich durch den logarithmischen Zusammenhang nur eine pH-Änderung von ± 1.

Für die Zwecke der vorliegenden Erfindung sollte ein Puffersystem gewählt werden, dessen pK$_s$-Wert zahlenmäßig im Bereich der Obergrenze des Bereichs optimaler pH-Werte für die Silica-Abscheidung auf den zu beschichtenden Festkörperpartikeln liegt, d. h., der pK$_s$-Wert sollte vorteilhafterweise etwa zwischen 10 und 11 liegen. Dadurch ist es möglich, die Puffersäure relativ zur Pufferbase im starken Überschuss vorzulegen, und trotzdem im Bereich der optimalen pH-Werte zu bleiben. Bei Puffersystemen mit einem pK$_s$-Wert nahe der unteren Grenze des Bereichs optimaler pH-Werte, d.h., der pK$_s$-Wert liegt zwischen 7-8, sollten Puffersäure und Pufferbase jedoch mindestens zu gleichen Teilen vorhanden sein, da ansonsten der pH-Wert während der Anfangsphase des Prozesses außerhalb des optimalen Beschichtungsbereiches liegt. Puffersysteme mit pKs-Werten zwischen 7-11 sind die Systeme Kaliumhydrogencarbonat/ Kaliumcarbonat, Natriumhydrogencarbonat/Natriumcarbonat, Kaliumdihydrogenphosphat/ Kaliumhydrogenphosphat, Kaliumhydrogensulfit/ Kaliumsulfit. Natürlich können auch Gemische aus mehreren Puffersystemen in verschiedenen Mengen und mit verschiedenen relativen Verhältnissen der einzelnen Pufferkomponenten eingesetzt werden, um den genauen Verlauf des pH-Werts während der Beschichtung spezifisch zu steuern. Besonders bevorzugt ist das Kaliumhydrogencarbonat/Kaliumcarbonat-Puffersystem mit einem pk$_s$-Wert von etwa 10,3.

Das Puffersystem und seine Funktion wird im folgenden anhand des Systems Kaliumhydrogencarbonat/ Kaliumcarbonat, und mit Kalium-Wasserglas als basischer Silicatlösung, beschrieben. Es versteht sich, dass für andere Puffersysteme und andere basische Silicatlösungen, wie Natrium-Wasserglas, analoges gilt.

Bei dem erfindungsgemäßen Beschichtungsverfahren werden die zu beschichtenden Festkörperpartikel als Dispersion in einer Pufferlösung vorgelegt. Das Kalium-Wasserglas wird zu dieser gepufferten Dispersion zudosiert. Dabei wird ein Überschuss an Kaliumhydrogencarbonat eingesetzt, um bei der Ausfällung des SiO$_2$ aus dem zudosierten Kalium-Wasserglas durch die Protonen des Kaliumhydrogencarbonats den pH-Wert in einem zur Bildung von Silica-Nanopartikeln optimalen Bereich unterhalb des Pufferpunkts (bevorzugt bei einem pH-Wert von etwa 8 bis 10) zu halten.

Fig. 5 zeigt einen beispielhaften kontrollierten pH-Verlauf während eines erfindungsgemäßen Festkörperpartikel-Beschichtungsprozesses An der Abszisse ist die Basenzugabe, d. h. die Zugabe von Kalium-Wasserglas, in relativen Einheiten angegeben, und an der Ordinate ist der zugehörige pH-Wert angegeben. Erfindungsgemäß wird bevorzugt innerhalb des kleinen abgegrenzten Kastens gearbeitet. Dementsprechend werden die Mengen an Puffersystem und an basischer Silicatlösung so aufeinander abgestimmt, dass bei Erreichen des rechten Rands des abgegrenzten Kastens (relative Basenzugabe etwa 0.37) die gesamte zur Beschichtung erforderliche basische Silicatlösung zugegeben ist. Vor Beginn der Zugabe der basischen Silicatlösung wird der pH-Wert des Puffers auf einen gewünschten Startpunkt eingestellt, im gezeigten Fall auf pH = 8.75. Im Verlauf des Beschichtungsprozesses wandert der pH-Wert langsam und kontinuierlich bis auf 10. Der Kurvenverlauf wird im Wesentlichen durch die vorgelegte Puffermenge bestimmt, der Startpunkt im Wesentlichen durch das Verhältnis der Pufferkomponenten zueinander, und der Endpunkt wird durch die Menge der insgesamt zudosierten basischen Silicatlösung vorgegeben.

Die erfindungsgemäß bevorzugt verwendeten basischen Silicatlösungen sind Kalium-Wasserglas und Natrium-Wasserglas. Kalium-Wasserglas und Natrium-Wasserglas sind Bezeichnungen für glasige, wasserlösliche Kaliumsilicate und Natriumsilicate bzw. deren viskose wässrige Lösungen. Die Wassergläser haben keine definierte Stöchiometrie, weshalb sie üblicherweise durch das Massenverhältnis oder das Molverhältnis SiO$_2$/ Alkalioxid sowie durch die Dichte der wässrigen Lösung charakterisiert werden. Da die Zusammensetzung je nach Hersteller und Charge variieren kann, ist es erforderlich, für jede Charge den Basenanteil ("KOH") und den Anteil an gelöstem Silica ("SiO$_2$") zu kennen, um einen reproduzierbaren Prozess zu gewährleisten.

Zum Ausfällen des in dem Kalium-Wasserglas als gelöstes Silikat enthaltenen SiO$_2$-Anteils muss der KOH-Anteil neutralisiert werden. Die in dem erfindungsgemäßen Beschichtungsprozess einzusetzende Menge an Hydrogencarbonat hängt daher ab vom KOH-Anteil des verwendeten Kalium-Wasserglases. Dafür kann einerseits das Verhältnis zwischen Puffersäure und Pufferbase des Puffersystems geändert werden, wodurch sich jedoch auch der pH-Verlauf während der Beschichtung ändert. So kann z.B. bei erhöhtem KOH-Anteil ein höherer Anteil Puffersäure im Puffersystem gewählt werden, wodurch der pH-Wert am Beginn der Beschichtungsreaktion niedriger ist. Alternativ kann die Puffermenge bei konstantem Verhältnis von Puffersäure und Pufferbase angepasst-werden, hierbei bleibt der pH-Verlauf auch nach der Anpassung an verschieden hohe KOH-Anteile nährungsweise konstant.

Bevorzugt wird das Puffersystem so eingestellt, dass einem Äquivalent Hydroxid in der basischen Silicatlösung 1 bis 4 molare Äquivalente, besonders bevorzugt 3 molare Äquivalente, Puffersäure gegenüberstehen. Bei einem Kaliumhydrogencarbonat/ Kaliumcarbonat-Puffersystem und Kalium-Wasserglas als basische Silicatlösung entspricht daher die eingesetzte Menge an Kaliumhydrogencarbonat bevorzugt 1 bis 4 molaren Äquivalenten, besonders bevorzugt 3 molaren Äquivalenten, der KOH-Menge des Kalium-Wasserglases.

Die Einstellung des Puffergemisches auf einen geeigneten Anfangs-pH-Wert erfolgt beispielsweise durch Auflösen geeigneter Mengen der Einzelkomponenten des Puffersystems, im Falle des Kaliumhydrogencarbonat/ Kaliumcarbonat-Puffersystems also von Kaliumhydrogencarbonat und Kaliumcarbonat in Wasser. Alternativ kann der Puffersäure mit geeigneten Mengen einer Base, oder die Pufferbase mit geeigneten Mengen einer Säure behandelt werden, z.B. bei einer Vorlage von Kaliumhydrogencarbonat durch Zugabe von Kaliumhydroxid-Lösung. In einem bevorzugten Ausführungsbeispiel erfolgt die Einstellung des Puffergemisches auf einen geeigneten Anfangs-pH-Wert automatisch bei Erwärmen einer Festkörperpartikeldispersion in einer Kaliumhydrogencarbonat-Lösung.

Bei Verwendung von Kaliumhydrogencarbonat zersetzen sich durch Erwärmen (oberhalb 50 °C) der Lösung bzw. Dispersion geringe Mengen des Kaliumhydrogencarbonats zu Kaliumhydroxid und Kohlenstoffdioxid, wobei durch weitere Reaktion des Kaliumhydroxids mit Hydrogencarbonat freies Carbonat entsteht. Es ergibt sich dabei ein Hydrogencarbonat/ Carbonat-Pufferstartgemisch mit einem vorteilhaften pH-Wert von etwa 8,5.

Selbstverständlich muss insgesamt eine ausreichende Menge des Puffersystems vorgelegt werden, dass während des gesamten Beschichtungsprozesses ausreichend Puffersäure zur Verfügung steht, um aus der zugegebenen Menge an basischer Silicatlösung das zur Beschichtung erforderliche Silica auszufällen und gleichzeitig innerhalb des zur Beschichtung optimalen pH-bereichs von 7-11 zu bleiben.

Um optimale Ausbildungsbedingungen für die Silicaschicht auf den zu beschichtenden Merkmalsstoff-Partikeln oder anderen zu beschichtenden Festkörperpartikeln zu gewährleisten, wird das erfindungsgemäße Beschichtungsverfahren bevorzugt folgendermaßen durchgeführt:

Zunächst wird der zu beschichtende Festkörper in Pulverform in einem wässrigen Medium dispergiert, bevorzugt in Wasser, und der pH-Wert der Dispersion mit einem geeigneten Puffersystem, bevorzugt mit Kalium-hydrogencarbonat/ Kaliumcarbonat, auf einen Anfangswert von mindestens 7,0 eingestellt. Alternativ kann auch zuerst eine Pufferlösung mit dem passenden pH-Wert hergestellt und das Festkörperpartikel-Pulver darin dispergiert werden. Bevorzugt werden pro 100 g Festkörperpartikeln etwa 500 bis 1000 ml Wasser verwendet. Die Menge und genaue Zusammensetzung des Puffersystems ist abhängig von der Menge und Zusammensetzung der basischen Silicatlösung, die zur Beschichtung der Festkörperpartikel verwendet wird. Bevorzugt wird als basische Silicatlösung eine gegebenenfalls vor der Beschichtungsreaktion mit Wasser verdünnte Kalium-Wasserglaslösung verwendet, die von 10 g/l bis 360 g/l $SiO_2$, sowie von 5 g/l bis 280 g/l KOH enthält. Besonders bevorzugte Konzentrationen sind 60 g/l bis 200 g/l $SiO_2$ und 30 g/l bis 150 g/l KOH, und ganz besonders bevorzugt 80 g/l SiO2 und 40 g/l KOH. Anstelle von KOH kann die basische Silicatlösung natürlich auch eine äquivalente Menge an NaOH oder einem anderen Hydroxid oder sonstige Base enthalten. Dabei muss beachtet werden, dass andere Basen und deren Reaktionsprodukte gegebenenfalls andere Löslichkeiten besitzen, weshalb die verwendeten Konzentrationen jeweils an die Löslichkeit angepasst werden müssen um eine Lösung zu erhalten.

Da das Puffersystem die einzige Säurequelle zur Ausfällung von Silica aus der basischen Silicatlösung ist, muss eine zur Ausfällung der gewünschten Menge an Silica ausreichende Menge an Puffer bereitgestellt werden. Bezogen auf eine bestimmte Hydroxidmenge in der basischen Silicatlösung sollten 1 bis 4 molare Äquivalente, bevorzugt 3 molare Äquivalente, Puffersäure zur Verfügung stehen. Die passende Pufferzusammensetzung kann beispielsweise durch Zugabe von Säure bzw. Base, oder durch geeignetes Mischen der einzelnen Pufferkomponenten eingestellt werden. Bei der Wahl von Menge und Zusammensetzung des Puffersystems sollte auch beachtet werden, dass der pH-Wert nach Vollendung der Zugabe der basischen Silicatlösung maximal 11,0 betragen darf. Bei höheren pH-Werten ist die Löslichkeit des Silica zu hoch, und die Bildung von Silica aus der zugeführten Wasserglaslösung ist begrenzt bzw. nicht mehr möglich. Bevorzugt wird die Pufferlösung in einer solchen Menge und Zusammensetzung vorgelegt, dass der pH-Wert zu Beginn des Beschichtungsprozesses mindestens 8,0 beträgt, da bei pH-Werten unter 8,0 die Keimbildungsgeschwindigkeit gering ist und recht große Silica-Keime gebildet werden. Gemäß einer besonders bevorzugten Ausbildungsform wird die Pufferlösung in einer solchen Menge und Zusammensetzung vorgelegt, dass der pH-Wert zu Beginn des Beschichtungsprozesses etwa 8,5 und am Ende des Beschichtungsprozesses etwa 10,5 beträgt.

Die Dispersion von Festkörperpartikeln in Pufferlösung wird bevorzugt unter Einwirkung von Scherkräften stark gerührt, um ein unerwünschtes Agglomerieren der zu beschichtenden Partikel sowie der gebildeten Silicapartikel jeweils aneinander zu verhindern und um dafür zu sorgen, dass eine gute Durchmischung von Silicapartikeln und zu beschichtenden Festkörperpartikeln gewährleistet ist. Auf diese Weise wird die Anlagerung von Silicapartikeln an der Oberfläche der zu beschichtenden Partikel gefördert.

Ferner ist es bevorzugt, die gepufferte Festkörperpartikeldispersion zu erwärmen, bevorzugt auf eine Temperatur von 60 bis 90 Grad Celsius, besonders bevorzugt auf 70 bis 90 Grad Celsius, und insbesondere auf 70 bis 80 Grad Celsius. Durch das Erwärmen wird die Abscheidungsrate der Silica-Nanopartikel an den Merkmalspartikeln begünstigt.

Zu der gepufferten Festkörperpartikeldispersion wird nun die basische Silikatlösung zugegeben. Die Zugabe erfolgt mit einer Geschwindigkeit, die sowohl den Gehalt an $SiO_2$ in der basischen Silicatlösung als auch die Oberfläche der zu beschichtenden Festkörperpartikel berücksichtigt. Bevorzugt wird die basische Silicatlösung mit einer Geschwindigkeit zudosiert, die 0,08 g bis 1,6 g $SiO_2$ pro $m^2$ Festkörperpartikel-Oberfläche pro Stunde (0,08 g bis 1,6 g $SiO_2$ $m^{-2}h^{-1}$), bevorzugt 0,3 bis 1,2 g $SiO_2$ $m^{-2}h^{-1}$, besonders bevorzugt 0,6 g $SiO_2$ $m^{-2}h^{-1}$, entspricht. Auf diese Weise wird sichergestellt, dass stets eine ausreichende Anzahl von Silica-Nanopartikeln durch Kondensation gebildet wird, und dass diese gebildeten Silica-Nanopartikel auch hinreichend gut mit den zu beschichtenden Festkörperpartikeln durchmischt werden können, um Silica-Agglomerate zu verhindern, und eine Anlagerung an die zu beschichtenden Festkörperpartikel zu begünstigen, und eine im Wesentlichen homogene Schicht auf den Festkörperpartikel-Oberflächen auszubilden. Insgesamt wird pro 1 $m^2$ zu beschichtender Festkörperpartikel-Oberfläche eine Menge an basischer Silicatlösung zugegeben, die etwa 0.8 bis 3.5 g $SiO_2$, bevorzugt 1.2 bis 2.8 g $SiO_2$, und besonders bevorzugt 2 g $SiO_2$, enthält. So wird auf den Oberflächen der zu beschichtenden Festkörperpartikel eine Silica-Beschichtung ausgebildet, die die Festkörperpartikel im Wesentlichen vollständig umhüllt, wie der in Fig. 3c gezeigte Schnitt durch die beschichteten Festkörperpartikel 3 zeigt.

Bevorzugt wird während der gesamten Beschichtungszeit die Temperatur auf dem vorher eingestellten erhöhten Wert gehalten und die Festkörperpartikeldispersion dispergiert. Wenn die Beschichtung abgeschlossen ist, werden die beschichteten Festkörperpartikel aus der Dispersion abgetrennt, beispielsweise durch Filtrieren, und getrocknet. Falls Partikel durch den Filtrations- oder Trocknungsschritt untereinander stark agglomeriert wurden bzw. durch Pressen des nassen Pulvers eine starke Kompaktierung aufgetreten ist, kann auch eine Nachbehandlung zur Trennung der Partikel bzw. Auflockerung des kompaktierten getrockneten Pulvers durchgeführt werden.

Direkt nach der Beschichtung ist der Säureschutz der Silicaschicht noch gering bzw. nicht vorhanden. Ein starker Säureschutz entsteht erst durch Nachbehandlung des Pulvers in einem Temperschritt. Gemäß einer bevorzugten Ausführungsform werden die Silicabeschichteten Festkörperpartikel bei einer Temperatur von mindestens 150 Grad Celsius getempert. Die "frisch abgeschiedene" Silica-Schicht besteht nämlich aus einzelnen Silica-Nanopartikeln, die nur durch Kohäsionskräfte aneinander haften, wodurch eine durchlässige Kugelschichtstruktur entsteht, und außerdem kann es unter Umständen auch einzelne Lücken durch Fehlstellen zwischen den Silica-Nanopartikeln geben, an denen die Festkörperpartikel-Oberfläche besser zugänglich ist. Durch einen Tempervorgang bei ausreichend hoher Temperatur können jedoch etwaige Lücken geschlossen werden und die einzelnen Silica-Partikel chemisch miteinander verbunden werden. Die chemische Verbindung erfolgt wiederum durch Kondensation der Silanolgruppen an den Oberflächen der Silica-Nanopartikel. Endprodukt ist dann ein Partikel mit einem relativ geschlossenen Silica-Netzwerk, wodurch die Durchlässigkeit der Schicht, z.B. gegenüber Säuren, stark verringert wird.

Während des Temperns kondensieren die Silanolgruppen an den Oberflächen benachbarter Silicapartikel miteinander, so dass die Silicapartikel der Beschichtung in mehr oder weniger starkem Umfang über Sauerstoffbrücken chemisch miteinander verbunden werden. Bei vollständiger Kondensation aller Silanolgruppen würde sich eine das zu beschichtende Festkörperpartikel vollständig umhüllende ununterbrochene Schicht aus einem Netzwerk von über Sauerstoffatome verknüpften Siliciumatomen ausbilden. In der Realität wird auch durch das Tempern keine derartige kontinuierliche dreidimensionale Hülle ausgebildet, aber es wird eine ausreichende Anzahl an chemischen Bindungen zwischen den Silica-Nanopartikeln geknüpft, um eine dauerhafte Haftung der Silica-Nanopartikel der Beschichtung aneinander zu gewährleisten, und Lücken bzw. Hohlräume zwischen den einzelnen Nanopartikeln durch Sinterprozesse zu verkleinern, zu schliessen oder unzugänglich zu machen.

Besonders bevorzugte Temperbedingungen sind 12 Stunden bei 150°C mit einer Aufheizrate von 5 Grad Celsius/min sowie, alternativ, vier Stunden bei 250 Grad Celsius oder 2 Stunden bei 300 Grad Celsius, bevorzugt ebenfalls mit einer Aufheizrate von 5 Grad Celsius/min.

Nachfolgend wird ein Ausführungsbeispiel beschrieben:

Ein temperierbarer Reaktor aus Glas, der mit einem Thermostaten, einem Ultra-Turrax T50 der Firma IKA mit einem Turraxkopf G45M, einer Schlauchpumpe der Firma Ismatek und einer Waage von Sartorius (zur Kontrolle der Flussmenge des Kalium-Wasserglases über das Gewicht) ausgestattet war, wurde mit 245 g destilliertem Wasser gefüllt und 43.5 g Kaliumhydrogencarbonat von Sigma Aldrich (technische Qualität, 98 %) darin gelöst. Die Lösung wurde auf 70 bis 80 Grad Celsius temperiert. Anschließend wurden 32 g eines zu beschichtenden anorganischen Merkmalsstoff-Pulvers mit einer Oberfläche von 7.7 $m^2$ zugegeben und zur Erzeugung einer Dispersion mit dem Ultra-Turrax eine Minute lang dispergiert. Dann wurden 210 g einer davor mit destilliertem Wasser verdünnten Kalium-Wasserglas-Lösung mit einem $SiO_2$-Anteil von 80 g/L und einem KOH-Anteil von 40 g/L mittels Pumpe im Verlauf von 30 Minuten kontinuierlich zudosiert. Während der gesamten Dauer der Dosierung wurde die Temperatur der Dispersion auf 70 bis 80 Grad Celsius gehalten, und der Ultra-Turrax weiter betrieben. Nach dem Ende der Dosierung wurde die Dispersion filtriert, mit 500 mL Wasser gewaschen und im Ofen mit einer Aufheizrate von 5° C pro Minute bei 300 °C für 2 h getempert. Es wurden 50 g beschichtetes Produkt erhalten.

Das erfindungsgemäße Verfahren zur Herstellung von Festkörperpartikeln mit einer Silicabeschichtung, bei dem ein Puffersystem als alleinige Säurequelle zur Ausfällung von Silica-Nanopartikeln dient, weist gegenüber Verfahren des Stands der Technik, bei denen zur Ausfällung von Silica separat Säure zugegeben wird, eine Reihe von Vorteilen auf. So ist bei dem erfindungsgemäßen Eintopf-Verfahren keine Dosierkontrolle für den Abgleich von zudosiertem Silicat und zudosierter Säure erforderlich, und auch die pH-Kontrolle entfällt, da das Puffersystem als einzige Säurequelle für einen selbstregulierenden "perfekten" pH-Verlauf sorgt. Auch bei Schwankungen der Zugabegeschwindigkeit der basischen Silicatlösung treten keine merklichen pH-Schwankungen auf, was zu verbesserten Produkteigenschaften führt. Unerwünschte Agglomerationen und Größenunterschiede bei den Silica-Nanopartikeln, die eine Folge von pH-Schwankungen sind, können bei dem erfindungsgemäßen Verfahren vermieden werden. Außerdem kann der verwendete pH-Bereich und dessen Verlauf während der Beschichtung durch eine gezielte Wahl der Puffer-Zusammensetzung und Puffermenge sehr genau eingestellt werden.

Bei der Beschichtung säurelabiler Festkörper, wie säurelabiler Merkmalsstoffe, hat das erfindungsgemäße Verfahren den zusätzlichen Vorteil, dass im Gegensatz zu Verfahren des Stands der Technik mit direkter Säuredosierung keine teilweise Zerstörung der säurelabilen Feststoffe auftritt. Bei Verfahren des Stands der Technik mit direkter Säuredosierung besteht an der Eintropfstelle der Säure kurzzeitig, bis zur hinreichenden Durchmischung mit der umgebenden Lösung, ein Säure-Überschuss, der säureempfindliche Festkörper schädigt. Dies ist insbesondere bei säurelabilen Merkmalsstoffen ein Problem, da die Merkmalsstoffe zum einen oft sehr kostspielig sind, und da zum anderen Nebenprodukte, die aus dem aufgelösten oder angegriffenen Merkmalsstoff entstehen, zu abweichenden Merkmal-Signalen, beispielsweise zusätzlichen Lumineszenzbanden bei Lumineszenzstoffen, führen können oder toxikologisch bedenklich sein können.

Das erfindungsgemäße Verfahren wurde für die Silicabeschichtung säurelabiler Merkmalsstoffe für Sicherheitsmerkmale konzipiert. Erfindungsgemäß beschichtete Merkmalsstoffe eignen sich in optimaler Weise zur Herstellung von Sicherheitsmerkmalen für den Einsatz bei Banknoten. Bei diesem Einsatzzweck ist es erforderlich, dass größere Agglomerationen vermieden werden, welche beispielsweise durch zusammensintern von Merkmalsstoffpartikeln und großen Silica-Agglomeraten entstehen können, d. h. die Partikelgrößen des Endprodukts müssen unter 20 $\mu$m bleiben. Außerdem müssen die beschichteten Merkmalsstoffe über eine Langzeit-Säurebeständigkeit und über eine "mechanische Stabilität" verfügen, d. h., die Silicaschicht muss sehr dicht und homogen sein und auch einer starken mechanischen Beanspruchung standhalten. Hier sind wiederum inhomogen beschichtete bzw. mit Silica-Agglomeraten zusammengesinterte Partikel nachteilig, da hier bei mechanischer Belastung leichter die Silicahülle abbrechen bzw. die Agglomerate auseinanderbrechen können und so die ungeschützte Merkmalsoberfläche freitritt. Diese Anforderungen werden von erfindungsgemäß hergestellten Silica-Beschichtungen erfüllt. Erfindungsgemäß beschichtete Merkmalsstoffe erreichen damit hohe Säurestabilitäten, auch nachdem sie mechanisch belastet wurden, z.B. durch Mahlung in einer Ultrazentrifugalmühle.

**Patentansprüche**

1.   Verfahren zur Herstellung von Festkörperpartikeln mit einer Silicabeschichtung, die als Merkmalsstoffe zur Erhöhung der Fälschungssicherheit von Wertdokumenten geeignet sind, wobei die Silica-beschichteten Festkörperpartikel Durchmesser im Bereich von 0,5 $\mu$m bis 60 $\mu$m haben und die Silicabeschichtung eine Dicke im Bereich von 100 nm bis 10 $\mu$m hat und das Verfahren die folgenden Schritte aufweist:

   - Dispergieren der zu beschichtenden säurelabilen Festkörperpartikel in einem wässrigen Medium zur Herstellung einer Festkörperpartikeldispersion und Einstellen des pH-Werts der Festkörperpartikeldispersion mittels eines Puffersystems zur Herstellung einer gepufferten Festkörperpartikeldispersion, oder
   - Lösen eines Puffersystems in einem wässrigen Medium zur Herstellung einer Pufferlösung mit einem pH-Wert, und Dispergieren der zu beschichtenden Festkörperpartikel in der Pufferlösung zur Herstellung einer gepufferten Festkörperpartikeldispersion, und
   - Zugeben einer basischen Silicatlösung zu der gepufferten Festkörperpartikeldispersion zur Ausbildung der Silicabeschichtung auf den Festkörperpartikeln während einer Beschichtungszeit, wobei die Zusammensetzung und die Mengen an Puffersystem und an basischer Silicatlösung so gewählt werden, dass der pH-Wert vor dem Zugeben der basischen Silicatlösung mindestens 7,0 beträgt und nach Vollendung der Zugabe der basischen Silicatlösung höchstens 11,0 beträgt und das Puffersystem ausgewählt wird aus der Gruppe, die aus den Puffersystemen Kaliumhydrogencarbonat/ Kaliumcarbonat, Natriumhydrogencarbonat/ Natriumcarbonat, Kaliumdihydrogenphosphat/ Kaliumhydrogenphosphat, Kaliumhydrogensulfit/Kaliumsulfit, sowie deren Mischungen, besteht, und bevorzugt Kaliumhydrogencarbonat/Kaliumcarbonat ist.

2. Verfahren nach Anspruch 1, **dadurch gekennzeichnet, dass** die Zusammensetzung und die Mengen an Puffersystem und an basischer Silicatlösung so gewählt werden, dass der pH-Wert vor dem Zugeben der basischen Silicatlösung mindestens 8,5 beträgt, und nach Vollendung der Zugabe der basischen Silicatlösung höchstens 10,5 beträgt.

3. Verfahren nach Anspruch 1 oder 2, **dadurch gekennzeichnet, dass** das Zugeben der basischen Silicatlösung zu der gepufferten Festkorperpartikeldispersion unter Durchmischung bei gleichzeitigem Vorhandensein von Scherkräften, bevorzugt unter Rühren und gleichzeitiger Verwendung eines Ultraturrax, der gepufferten Festkörperpartikeldispersion durchgeführt wird.

4. Verfahren nach einem der Ansprüche 1 bis 3, **dadurch gekennzeichnet, dass** die Temperatur der gepufferten Festkörperpartikeldispersion vor dem Zugeben der basischen Silicatlösung auf 60 bis 90° C, bevorzugt auf 70 bis 90° C, besonders bevorzugt auf 70 bis 80° C, eingestellt wird, und während der Beschichtungszeit der Festkörperpartikel gehalten wird.

5. Verfahren nach einem der Ansprüche 1 bis 4, **dadurch gekennzeichnet, dass** als basische Silicatlösung Kalium-Wasserglas oder Natrium-Wasserglas verwendet wird.

6. Verfahren nach einem der Ansprüche 1 bis 5, **dadurch gekennzeichnet, dass** die basische Silicatlösung von 10 g/L bis 360 g/L $SiO_2$, bevorzugt 60 g/L bis 200 g/L $SiO_2$, besonders bevorzugt 80 g/L $SiO_2$, enthält, sowie von 5 g/L bis 280 g/L KOH, bevorzugt 30 g/L bis 150 g/L KOH, besonders bevorzugt 40 g/L KOH, oder eine diesen KOH-Konzentrationen äquivalente Menge an NaOH oder einer anderen Base enthält.

7. Verfahren nach einem der Ansprüche 1 bis 6, **dadurch gekennzeichnet, dass** ein Puffersystem mit einem Anteil an Puffer-Säure eingesetzt wird, die 1 bis 4 molaren Äquivalenten, bevorzugt 3 molaren Äquivalenten, bezogen auf 1 Äquivalent Hydroxid in der basischen Silikatlösung entspricht.

8. Verfahren nach einem der Ansprüche 1 bis 7, **dadurch gekennzeichnet, dass** pro 1 m² Oberfläche der zu beschichtenden Festkörperpartikel eine Menge an basischer Silicatlösung zugegeben wird, die 0.8 bis 3.5 g $SiO_2$, bevorzugt 1.2 bis 2.8 g $SiO_2$, besonders bevorzugt 2 g $SiO_2$, enthält.

9. Verfahren nach einem der Ansprüche 1 bis 8, **dadurch gekennzeichnet, dass** zur Herstellung der gepufferten Festkörperpartikeldispersion für jeweils 100 g Festkörperpartikel 500 bis 1000 ml Wasser verwendet werden.

10. Verfahren nach einem der Ansprüche 1 bis 9, **dadurch gekennzeichnet, dass** die basische Silicatlösung mit einer Geschwindigkeit zu der gepufferten Festkörperpartikeldispersion zugegeben wird, die 0,08 g bis 1,6 g $SiO_2$ pro m² Festkörperpartikel-Oberfläche pro Stunde (0,08 g bis 1,6 g $SiO_2$ $m^{-2}$ $h^{-1}$), bevorzugt 0,3 bis 1,2 g $SiO_2$ $m^{-2}$ $h^{-1}$, besonders bevorzugt 0,6 g $SiO_2$ $m^{-2}$ $h^{-1}$, entspricht.

11. Verfahren nach einem der Ansprüche 1 bis 10, **dadurch gekennzeichnet, dass** nach dem Ende der Beschichtungszeit die silicabeschichteten Festkörperpartikel aus der gepufferten Festkörperpartikeldispersion abgetrennt, getrocknet und getempert werden, wobei der Schritt des Temperns bei einer Temperatur in dem Bereich von 150° C bis 350° C und für eine Zeitdauer von mindestens 1 Stunde erfolgt.

12. Verfahren nach Anspruch 11, **dadurch gekennzeichnet, dass** die silicabeschichteten Festkörperpartikel bei 150° C 12 Stunden lang getempert werden oder bei 250° C 4 Stunden lang getempert werden oder bei 300° C 2 Stunden lang getempert werden, wobei mit einer Geschwindigkeit von 5° C/min auf 150 °C bzw. 250° C bzw. 300° C aufgeheizt wird.

13. Verfahren nach einem der Ansprüche 1 bis 12, **dadurch gekennzeichnet, dass** als zu beschichtende Festkörperpartikel anorganische Festkörper verwendet werden.

14. Verfahren nach Anspruch 13, **dadurch gekennzeichnet, dass** als säurelabiler Merkmalsstoff eine oder mehrere lumineszierende Substanzen mit charakteristischen Lumineszenzeigenschaften oder eine oder mehrere magnetische Substanzen oder ein oder mehrere elektrisch leitfähige Substanzen oder ein oder mehrere spezifisch im infraroten Wellenlängenbereich absorbierende Substanzen verwendet werden.

15. Verfahren nach einem der Ansprüche 1 bis 14, **dadurch gekennzeichnet, dass** auf den zu beschichtenden Festkörperpartikeln eine Hülle aus Silica-Nanopartikeln ausgebildet sind, wobei die Silica-Nanopartikel Durchmesser im Bereich von 1 nm bis 100 nm haben.

16. Verfahren nach Anspruch 15, **dadurch gekennzeichnet dass** die Silica-Nanopartikel der Hülle zumindest teilweise unter Ausbildung eines dreidimensionalen Netzwerks, das die zu beschichtenden Festkörperpartikel im Wesentlichen lückenlos umschließt, kondensiert sind.

**Claims**

1. A method for producing solid particles having a silica coating, which are suitable as feature substances for increasing the falsification security of value documents, wherein the silica-coated solid particles have diameters in the range of 0.5 μm to 60 μm and the silica coating has a thickness in the range of 100 nm to 10 μm and the method comprises the following steps:

   - dispersing the acid-labile solid particles to be coated in an aqueous medium for producing a solid-particle dispersion, and setting the pH value of the solid-particle dispersion by means of a buffer system for producing a buffered solid-particle dispersion, or
   - dissolving a buffer system in an aqueous medium for producing a buffer solution having a pH value, and dispersing the solid particles to be coated in the buffer solution for producing a buffered solid-particle dispersion, and
   - adding a basic silicate solution to the buffered solid-particle dispersion for forming the silica coating on the solid particles during a coating time, wherein the composition and the quantities of buffer system and of basic silicate solution are chosen such that the pH value, before the addition of the basic silicate solution, is at least 7.0, and after the completion of the addition of the basic silicate solution is at most 11.0 and the buffer system is chosen from the group which consists of the buffer systems potassium hydrogen carbonate/potassium carbonate, sodium hydrogen carbonate/sodium carbonate, potassium dihydrogen phosphate/potassium hydrogen phosphate, potassium hydrogen sulphite/potassium sulphite, as well as their mixtures, and preferably is potassium hydrogen carbonate/potassium carbonate.

2. The method according to claim 1, **characterized in that** the composition and the quantities of buffer system and of basic silicate solution are chosen such that the pH value, before the addition of the basic silicate solution, is at least 8.5, and after the completion of the addition of the basic silicate solution is at most 10.5.

3. The method according to claim 1 or 2, **characterized in that** the addition of the basic silicate solution to the buffered solid-particle dispersion is carried out with intermixture with the simultaneous presence of shearing forces, preferably with stirring and simultaneous use of an Ultraturrax, of the buffered solid-particle dispersion.

4. The method according to any of claims 1 to 3, **characterized in that** the temperature of the buffered solid-particle dispersion, before the addition of the basic silicate solution, is set to 60 to 90° C, preferably to 70 to 90° C, particularly preferably to 70 to 80° C, and is maintained during the coating time of the solid particles.

5. The method according to any of claims 1 to 4, **characterized in that** as a basic silicate solution there is used potassium water glass or sodium water glass.

6. The method according to any of claims 1 to 5, **characterized in that** the basic silicate solution contains 10 g/L to 360 g/L $SiO_2$, preferably 60 g/L to 200 g/L $SiO_2$, particularly preferably 80 g/L $SiO_2$, as well as 5 g/L to 280 g/L KOH, preferably 30 g/L to 150 g/L KOH, particularly preferably 40 g/L KOH, or a quantity of NaOH or of a different base equivalent to these KOH concentrations.

7. The method according to any of claims 1 to 6, **characterized in that** a buffer system with a content of buffer acid is employed, which corresponds to 1 to 4 molar equivalents, preferably 3 molar equivalents, with respect to 1 equivalent hydroxide in the basic silicate solution.

8. The method according to any of claims 1 to 7, **characterized in that** per 1 $m^2$ surface of the solid particles to be coated, there is added a quantity of basic silicate solution which contains 0.8 to 3.5 g $SiO_2$, preferably 1.2 to 2.8 g $SiO_2$, particularly preferably 2 g $SiO_2$.

9. The method according to any of claims 1 to 8, **characterized in that** for producing the buffered solid-particle dispersion, for each 100 g solid particles 500 to 1000 ml water are used.

10. The method according to any of claims 1 to 9, **characterized in that** the basic silicate solution is added to the buffered solid-particle dispersion with a speed which corresponds to 0.08 g to 1.6 g $SiO_2$ per $m^2$ solid-particle surface per hour (0.08 g to 1.6 g $SiO_2$ $m^{-2}$ $h^{-1}$), preferably 0.3 to 1.2 g $SiO_2$ $m^{-2}$ $h^{-1}$, particularly preferably 0.6 g $SiO_2$ $m^{-2}$ $h^{-1}$.

11. The method according to any of claims 1 to 10, **characterized in that** after the end of the coating time,

221

# EP 2 507 321 B1

the silica-coated solid particles are separated from the buffered solid-particle dispersion, dried and annealed, whereby the step of annealing is effected at a temperature in the range of 150° C to 350° C, and for a period of at least 1 hour.

12. The method according to claim 11, **characterized in that** the silica-coated solid particles are annealed at 150° C for 12 hours or are annealed at 250° C for 4 hours or are annealed at 300° C for 2 hours, whereby the heating is effected with a speed of 5° C/min up to 150° C or 250° C or 300° C.

13. The method according to any of claims 1 to 12, **characterized in that** as solid particles to be coated there are used inorganic solids.

14. The method according to claim 13, **characterized in that** as acid-labile feature substance there are used one or several luminescent substances with characteristic luminescence properties or one or several magnetic substances or one or several electrically conductive substances or one or several substances absorbing specifically in the infrared wavelength range.

15. The method according to any of claims 1 to 14, **characterized in that** on the solid particles to be coated there is formed a shell of silica nanoparticles, whereby the silica nanoparticles have diameters in the range of 1 nm to 100 nm.

16. The method according to claim 15, **characterized in that** the silica nanoparticles of the shell are condensed, at least partly so as to form a three-dimensional network which substantially gaplessly encloses the solid particles to be coated.

**Revendications**

1. Procédé de fabrication de particules de corps solides ayant un revêtement en silice appropriés en tant que substances caractéristiques destinées à l'accroissement de la sécurité contre la contrefaçon de documents de valeur, les particules de corps solides revêtues de silice ayant des diamètres situés entre 0,5 μm et 60 μm et le revêtement en silice ayant une épaisseur située entre 100 nm à 10 μm et le procédé comportant les étapes suivantes :

- dispersion des particules de corps solides acido-labiles à revêtir dans un milieu aqueux pour la fabrication d'une dispersion de particules de corps solides et ajustement de la valeur du pH de la dispersion de particules de corps solides au moyen d'un système tampon pour la fabrication d'une dispersion tampon de particules de corps solides, ou

- dissolution d'un système tampon dans un milieu aqueux pour la fabrication d'une solution tampon ayant une valeur du pH, et dispersion des particules de corps solides à revêtir dans la solution tampon pour la fabrication d'une dispersion tampon de particules de corps solides, et

- adjonction d'une solution de silice basique à la dispersion tampon de particules de corps solides pour la constitution du revêtement en silice sur les particules de corps solides durant un temps de revêtement, la composition et les quantités de système tampon et de solution de silice basique étant choisies de telle sorte que la valeur du pH est d'au moins 7,0 avant l'adjonction de la solution de silice basique et est d'au plus 11,0 après l'achèvement de l'adjonction de la solution de silice basique, et le système tampon étant choisi dans le groupe composé des systèmes tampon hydrogénocarbonate de potassium/ carbonate de potassium, hydrogénocarbonate de sodium/ carbonate de sodium, dihydrogénophosphate de potassium/ hydrogénophosphate de potassium, hydrogénosulfite de potassium/ sulfite de potassium, ainsi que leurs mélanges, et étant de préférence du hydrogénocarbonate de potassium/ carbonate de potassium.

2. Procédé selon la revendication 1, **caractérisé en ce que** la composition et les quantités de système tampon et de solution de silice basique sont choisies de telle sorte que la valeur du pH est d'au moins 8,5 avant l'adjonction de la solution de silice basique et est d'au plus 10,5 après l'achèvement de l'adjonction de la solution de silice basique.

3. Procédé selon la revendication 1 ou 2, **caractérisé en ce que** l'adjonction de la solution de silice basique à la dispersion tampon de particules de corps solides est effectuée en mélangeant la dispersion tampon de particules de corps solides en présence de forces de cisaillement, de préférence en malaxant en utilisant un ultraturrax.

4. Procédé selon une des revendications de 1 à 3, **caractérisé en ce que** la température de la dispersion tampon de particules de corps solides est, avant l'adjonction de la solution de silice basique, réglée sur 60 à 90°, de préférence sur 70 à 80°, et est maintenue durant le temps de revêtement des particules de corps solides.

5. Procédé selon une des revendications de 1 à 4, **caractérisé en ce que**, en tant que solution de silice basique, c'est du verre soluble de potassium ou du verre soluble de sodium qui est utilisé.

**14**

**6.** Procédé selon une des revendications de 1 à 5, **caractérisé en ce que** la solution de silice basique contient de 10 g/L à 360 g/L de $SiO_2$, de préférence de 60 g/L à 200 g/L de $SiO_2$, particulièrement de préférence 80 g/L de $SiO_2$, et contient de 5 g/L à 280 g/L de KOH, de préférence de 30 g/L à 150 g/L de KOH, particulièrement de préférence 40 g/L de KOH, ou une quantité de NaOH équivalente à ces concentrations de KOH ou une autre base.

**7.** Procédé selon une des revendications de 1 à 6, **caractérisé en ce qu'**un système tampon ayant une part d'acide tampon correspondant à 1 à 4 équivalents molaires, de préférence à 3 équivalents molaires relativement à un équivalent hydroxyde dans la solution de silice basique est mis en oeuvre.

**8.** Procédé selon une des revendications de 1 à 7, **caractérisé en ce que**, par 1 $m^2$ de surface des particules de corps solides à revêtir, une quantité de solution de silice basique contenant de 0.8 à 3.5 g de $SiO_2$, de préférence de 1.2 à 2.8 g de $SiO_2$, particulièrement de préférence de 2 g de $SiO_2$ est adjointe.

**9.** Procédé selon une des revendications de 1 à 8, **caractérisé en ce que**, pour la fabrication de la dispersion tampon de particules de corps solides, pour respectivement 100 g de particules de corps solides, de 500 à 1000 ml d'eau sont utilisés.

**10.** Procédé selon une des revendications de 1 à 9, **caractérisé en ce que** la solution de silice basique est adjointe à la dispersion tampon de particules de corps solides à une vitesse qui correspond à 0,08 g à 1,6 g de $SiO_2$ par $m^2$ de surface des particules de corps solides par heure (0,08 g à 1,6 g de $SiO_2$ $m^{-2}$ $h^{-1}$, de préférence 0,3 à 1,2 g de $SiO_2$, $m^{-2}$ $h^{-1}$), particulièrement de préférence 0,6 g de $SiO_2$, $m^{-2}$ $h^{-1}$.

**11.** Procédé selon une des revendications de 1 à 10, **caractérisé en ce que**, après la fin du temps de revêtement, les particules de corps solides revêtues de silice sont séparées de la dispersion tampon de particules de corps solides, séchées et soumises à un recuit, l'étape du recuit ayant lieu à une température située entre 150° C et 350° C et durant au moins 1 heure.

**12.** Procédé selon la revendication 11, **caractérisé en ce que** les particules de corps solides revêtues de silice sont soumises à un recuit à 150° C pendant 12 heures ou à 250° C pendant 4 heures ou sont soumises à un recuit à 300° C pendant 2 heures, la température étant portée à une vitesse de 5° C/min à 150° C ou 250° C ou 300° C.

**13.** Procédé selon une des revendications de 1 à 12, **caractérisé en ce que**, en tant que particules de corps solides à revêtir, ce sont des corps solides anorganiques qui sont utilisés.

**14.** Procédé selon la revendication 13, **caractérisé en ce que**, en tant que substance caractéristique acidolabile, ce sont une ou plusieurs substances luminescentes à propriétés luminescentes caractéristiques ou une ou plusieurs substances magnétiques ou une ou plusieurs substances électroconductrices ou une ou plusieurs substances absorbantes spécifiquement dans la gamme de longueurs d'onde infrarouge qui sont utilisées.

**15.** Procédé selon une des revendications de 1 à 14, **caractérisé en ce que**, sur les particules de corps solides à revêtir, une enveloppe en nanoparticules de silice est réalisée, les nanoparticules de silice ayant un diamètre situé entre 1 nm et 100 nm.

**16.** Procédé selon la revendication 15, **caractérisé en ce que** les nanoparticules de silice de l'enveloppe sont condensées au moins partiellement en formant un réseau tridimensionnel qui enserre de manière essentiellement sans faille les particules de corps solides à revêtir.

FIG 1

FIG 2

(a) (b) (c)

FIG 3

(a) (b) (c)

FIG 4

FIG 5

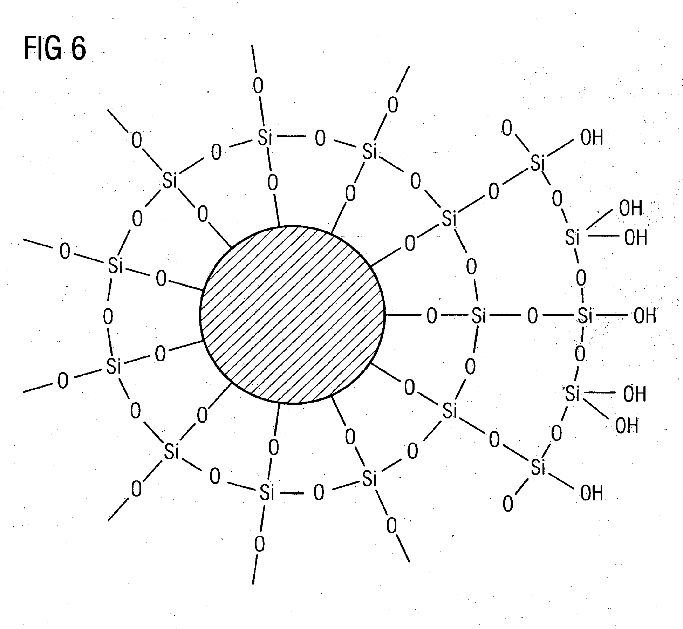

FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006072380 A
- WO 2006030001 A
- US 2885366 A
- GB 2042574 A
- US 6132773 A

- WO 2006072380 A2
- JP 3650292 B
- EP 1548071 A1
- EP 1179507 A1